# FASCICULE DE BREVET EUROPEEN

(11) **EP 3 680 143 B1**
(45) Date de publication et mention de la délivrance du brevet: **03.05.2023**
(21) Numéro de dépôt: 20150778.7
(22) Date de dépôt: 08.01.2020
(51) Int. Cl.: B61C 17/04, B61D 27/00

(54) **SYSTÈME D'ÉCHANGE THERMIQUE, ENSEMBLE D'ÉCHANGE THERMIQUE COMPRENANT UN TEL SYSTÈME, VÉHICULE FERROVIAIRE ET PROCÉDÉ ASSOCIÉS**
WÄRMETAUSCHERSYSTEM, WÄRMETAUSCHEREINHEIT, DIE EIN SOLCHES SYSTEM UMFASST, ENTSPRECHENDES SCHIENENFAHRZEUG UND VERFAHREN
HEAT EXCHANGE SYSTEM, HEAT EXCHANGE ASSEMBLY INCLUDING SUCH A SYSTEM, ASSOCIATED RAILWAY VEHICLE AND METHOD

(30) Priorité: 09.01.2019 FR 1900195
(43) Date de publication de la demande: 15.07.2020
(73) Titulaire: ALSTOM Transport Technologies, 93400 Saint-Ouen (FR)
(72) Inventeur: AUDEMAR, Christophe, 65310 HORGUES (FR); DAGUIN, Yann, 65310 LALOUBÈRE (FR); CHEVALIER, Philippe, 92500 RUEIL MALMAISON (FR); ABOU-EID, Rami, 75018 PARIS (FR)
(74) Mandataire: Lavoix

(56) Documents cités:
- EP-A2- 2 078 654
- WO-A1-2019/220036
- DE-A1-102005 048 241
- US-A1- 2008 245 503

## Description

La présente invention concerne un système d'échange thermique pour une chaîne de traction d'un véhicule, notamment un véhicule ferroviaire.

La présente invention concerne également un ensemble d'échange thermique, un véhicule ferroviaire et un procédé associé.

Le document DE 10 2005 048241 A1 décrit un système de refroidissement de batteries à deux circuits.

On connaît des systèmes d'échange thermique pour des chaînes de traction, comprenant un échangeur thermique. Un fluide caloporteur est destiné à circuler dans de tels systèmes d'échange thermique, afin de refroidir la chaîne de traction. L'échangeur thermique est configuré pour refroidir le fluide caloporteur en évacuant de la chaleur du fluide caloporteur en direction d'un environnement extérieur. L'échangeur thermique comprend, par exemple, un ventilateur permettant d'évacuer cette chaleur vers l'extérieur.

L'efficacité d'un tel échangeur thermique est variable, notamment en fonction de la température de l'environnement extérieur.

Typiquement, en été, l'échangeur thermique est sollicité fortement afin de refroidir le fluide caloporteur de manière suffisante. Au contraire, en hiver, l'échangeur thermique est moins sollicité, car l'air ambiant du véhicule refroidit le fluide caloporteur rapidement.

Cependant, de tels systèmes d'échange thermique ne sont pas entièrement satisfaisants. En particulier, l'efficacité énergétique de tels systèmes d'échange thermique peut être améliorée.

Un but de l'invention est alors de proposer un système d'échange thermique présentant une meilleure efficacité énergétique, tout en étant facile à mettre en oeuvre.

L'invention a pour objet un système d'échange thermique selon la revendication 1.

Le système d'échange thermique est ainsi apte à échanger de l'énergie thermique avec le système de climatisation. Le système d'échange thermique présente donc une efficacité énergétique améliorée, et reste facile à mettre en oeuvre.

Lors de basses températures dans l'environnement extérieur au véhicule ferroviaire, le système de climatisation est destiné à chauffer la cabine du véhicule ferroviaire. Via le couplage entre le système d'échange thermique et le système de climatisation, au moins une partie de l'énergie thermique issue du système d'échange thermique de par le fonctionnement de la chaîne de traction est transférée au système de climatisation. Le couplage permet ainsi d'utiliser au moins une partie de l'énergie thermique provenant du système d'échange thermique pour chauffer la cabine du véhicule ferroviaire. L'efficacité énergétique globale du véhicule ferroviaire est ainsi améliorée.

Lors de températures élevées dans l'environnement extérieur au véhicule ferroviaire, le système d'échange thermique permet de mieux refroidir la chaîne de traction par échange de chaleur entre le système d'échange thermique et le système de climatisation. Par exemple, une éventuelle surcapacité du système de climatisation est ainsi utilisée pour refroidir la chaîne de traction via le système d'échange thermique. L'efficacité énergétique globale du véhicule ferroviaire est donc également améliorée en cas de températures élevées dans l'environnement extérieur.

Comme les chaînes de traction de véhicules ferroviaires sont susceptibles de dissiper une grande partie de l'énergie électrique reçue en entrée, il est particulièrement avantageux d'utiliser l'énergie dissipée pour échanger de la chaleur avec une cabine du véhicule ferroviaire via le couplage du système d'échange thermique au système de climatisation. Notamment, l'efficacité énergétique globale du véhicule ferroviaire est améliorée d'un ordre de grandeur supérieur à une optimisation du système de climatisation ou du système d'échange thermique de manière séparée.

Suivant d'autres aspects avantageux de l'invention, le système d'échange thermique est selon l'une quelconque des revendications 2 à 6.

L'invention a également pour objet un système d'échange thermique selon la revendication 7.

L'invention a également pour objet un ensemble d'échange thermique selon la revendication 8.

Suivant un autre aspect avantageux de l'invention, l'ensemble d'échange thermique est selon la revendication 9.

L'invention a également pour objet un véhicule selon la revendication 10.

L'invention a également pour objet un procédé d'échange thermique selon la revendication 11.

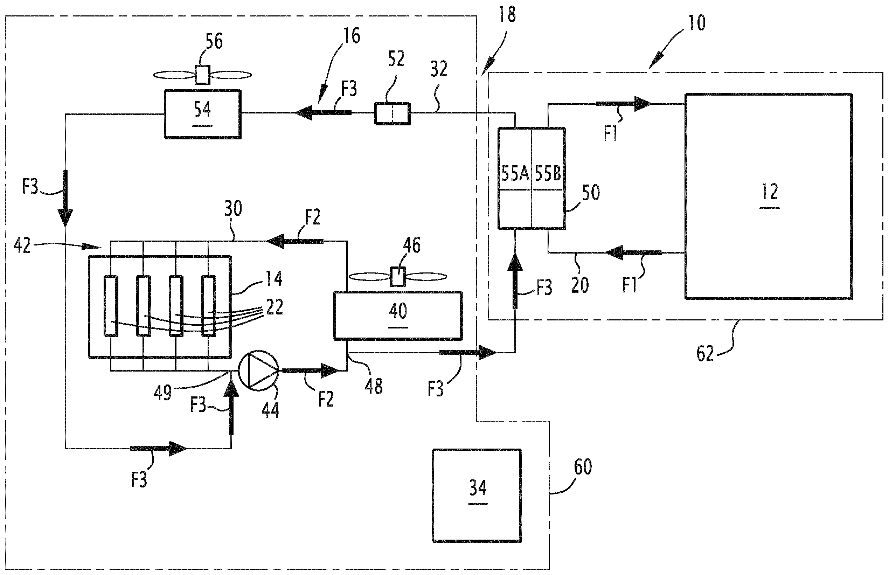

Ces caractéristiques et avantages de l'invention apparaîtront à la lecture de la description qui va suivre, donnée uniquement à titre d'exemple non limitatif, et faite en référence aux dessins annexés, sur lesquels la figure unique est une représentation schématique d'un véhicule ferroviaire comprenant une chaîne de traction et un ensemble d'échange thermique comportant un système de climatisation et un système d'échange thermique.

Sur la figure unique, un véhicule 10, notamment un véhicule ferroviaire, comprend un système de climatisation 12, une chaîne de traction 14 et un système d'échange thermique 16, le système de climatisation 12 et le système d'échange thermique 16 formant un ensemble d'échange thermique 18.

Le véhicule ferroviaire 10 comprend en outre, non représenté, au moins une cabine, telle qu'une ou plusieurs cabines de passager, une cabine de conducteur, et/ou une cabine de charge, par exemple pour des marchandises.

Le système de climatisation 12 est configuré pour climatiser une ou plusieurs cabines respectives du véhicule ferroviaire 10. Par exemple, lors d'une température élevée dans l'environnement extérieur au véhicule ferroviaire 10, le système de climatisation 12 est configuré pour refroidir la cabine. Lors d'une température basse dans l'environnement extérieur, le système de climatisation 12 est configuré pour chauffer la cabine.

Le système de climatisation 12 est en outre apte à préchauffer la chaîne de traction 14 en préparation d'un démarrage de celle-ci. Notamment, le système de climatisation 12 est apte à transmettre de l'énergie thermique à la chaîne de traction 14 via le système d'échange thermique 16 auquel il est couplé.

Le système de climatisation 12 est couplé au système d'échange thermique 16, et est alors apte à échanger de l'énergie thermique avec le système d'échange thermique 16.

Le système de climatisation 12 comporte un circuit externe 20 connecté au système d'échange thermique 16. Le système de climatisation 12 est configuré pour faire circuler un fluide d'échange thermique à l'intérieur du circuit externe 20, comme représenté par des flèches F1 sur la figure. Le fluide d'échange thermique est par exemple un fluide diphasique.

La chaîne de traction 14 est connue en soi, et comprend par exemple un convertisseur d'énergie électrique, non représenté. Le convertisseur d'énergie électrique est configuré par exemple pour convertir une énergie électrique alternative issue d'un réseau d'alimentation électrique en une autre énergie électrique alternative délivrée à un moteur électrique, non représenté. Le convertisseur d'énergie électrique comporte, comme connu en soi, plusieurs bras de commutation 22, chaque bras de commutation 22 étant par exemple associé à une phase respective de l'énergie électrique alternative délivrée en sortie du convertisseur et comportant plusieurs interrupteurs connectés en série. Chaque interrupteur est par exemple formé d'un transistor et d'une diode connectée en antiparallèle du transistor. Le transistor est par exemple un transistor bipolaire à grille isolée, également appelé IGBT (de l'anglais *Insulated Gate Bipolar Transistor*)*.*

La chaîne de traction 14, et notamment chaque bras de commutation 22, est susceptible de dissiper de l'énergie électrique en énergie thermique lors de son fonctionnement. Par exemple, la chaîne de traction 14 est susceptible de dissiper une énergie électrique comprise entre 25 kW et 150 kW en énergie thermique.

Le système d'échange thermique 16 est par exemple un système de refroidissement apte à refroidir la chaîne de traction 14. Le système d'échange thermique 16 est couplé au système de climatisation 12.

Le système d'échange thermique 16 est notamment fluidiquement séparé du système de climatisation 12. Par « fluidiquement séparé », il est entendu que le système d'échange thermique 16 est étanche pour le fluide destiné à circuler dans le système d'échange thermique 16 par rapport au système de climatisation 12.

Le système d'échange thermique 16 est en particulier configuré pour faire circuler un fluide caloporteur distinct d'un fluide destiné à circuler dans le système de climatisation 12.

En complément facultatif, le système d'échange thermique 16 est également apte à fonctionner comme système de chauffage pour préchauffer un environnement de la chaîne de traction 14. Le système d'échange thermique 16 comprend un circuit primaire 30, un circuit secondaire 32 et un contrôleur 34.

Les circuits primaire et secondaire 30, 32 sont configurés pour faire circuler le fluide caloporteur, tel que de l'eau, notamment de l'eau glycolée. Comme représenté sur la figure par les flèches F2, le circuit primaire 30 est configuré pour faire circuler une première partie du fluide caloporteur ; et comme représenté par les flèches F3, le circuit secondaire 32 est configuré pour faire circuler une deuxième partie du fluide caloporteur. La deuxième partie présente, de préférence, une fraction d'un débit de la première partie, par exemple un débit sensiblement égal à 20 litres/minute.

Le circuit primaire 30 comporte, de préférence selon le sens de circulation du fluide caloporteur, un premier échangeur thermique 40, une zone d'échange thermique 42 passant par la chaîne de traction 14 et une pompe 44. Le premier échangeur thermique 40 est apte à évacuer de l'énergie thermique du fluide caloporteur vers l'environnement extérieur du véhicule ferroviaire 10 et comprend, par exemple, un système de ventilation 46. La zone d'échange thermique 42 du circuit primaire 30 est en contact thermique avec la chaîne de traction 14 et configurée pour transférer de l'énergie thermique de la chaîne de traction 14 dans le fluide caloporteur. La pompe 44 est apte à entraîner une circulation du fluide caloporteur.

En complément facultatif, le circuit primaire 30 comporte un ou plusieurs échangeurs additionnels, non représentés.

Le circuit secondaire 32 est connecté au circuit primaire 30 en dérivation du circuit primaire 30 par une dérivation 48. Par exemple, le circuit secondaire 32 est connecté au circuit primaire 30 par une dérivation d'une partie de haute pression du circuit primaire 30, notamment en aval de la pompe 44 et en amont du premier échangeur thermique 40 selon le sens de circulation du fluide caloporteur.

En variante, non représentée, le circuit secondaire 32 est connecté au circuit primaire 30 par une déviation 48 positionnée en aval du premier échangeur thermique 40 et en amont de la zone d'échange thermique 42 selon le sens de circulation du fluide caloporteur.

Le circuit secondaire 32 est en outre connecté au circuit primaire 30 par un retour 49 configuré pour laisser échapper le fluide caloporteur dévié par le circuit secondaire 32 dans le circuit primaire 30. Par exemple, le circuit secondaire 32 est connecté par le retour 49 à une partie de basse pression du circuit primaire 30. De préférence, le retour 49 est disposé en aval de la zone d'échange thermique 42 et en amont de la pompe 44, selon le sens de circulation du fluide caloporteur.

En variante, non représentée, le circuit secondaire 32 est connecté au circuit primaire 30 par un retour 49 disposé en amont de la zone d'échange thermique 42 et en aval du premier échangeur thermique 40, selon le sens de circulation du fluide caloporteur.

Le circuit secondaire 32 comporte un deuxième échangeur thermique 50 et un dispositif 52 de régulation de la circulation du fluide caloporteur.

En complément facultatif, le circuit secondaire 32 comporte en outre un échangeur thermique additionnel 54, destiné à être découplé du système de climatisation 12. Par « découplé », on entend qu'aucun échange thermique n'est observé entre l'échangeur thermique additionnel 54 et le système de climatisation 12 lors d'un fonctionnement de l'ensemble d'échange thermique 18.

De préférence, le circuit secondaire 32 est agencé de manière que le deuxième échangeur thermique 50, le dispositif de régulation 52 et l'échangeur thermique additionnel 54 sont disposés dans cet ordre suivant le sens de circulation du fluide caloporteur à l'intérieur du circuit secondaire 32.

Le circuit secondaire 32 est configuré pour refroidir le fluide caloporteur par échange thermique à l'intérieur du deuxième échangeur thermique 50 et, par exemple, par échange thermique à l'intérieur l'échangeur thermique additionnel 54 avec l'environnement externe.

Le contrôleur 34 est configuré pour recevoir au moins une température mesurée de la chaîne de traction 14.

En complément facultatif, le contrôleur 34 est configuré pour recevoir au moins une température mesurée du fluide caloporteur, de l'intérieur de la cabine et/ou de l'environnement extérieur du véhicule ferroviaire 10.

Le contrôleur 34 est en outre configuré pour piloter une quantité de fluide caloporteur circulant dans le système d'échange thermique 16 en fonction de la ou des températures reçues. Notamment, le contrôleur 34 est configuré pour piloter la pompe 44 et/ou le dispositif de régulation 52.

Par exemple, si la température mesurée de l'environnement extérieur est très basse, le contrôleur 34 est configuré pour piloter le dispositif de régulation 52 dans une position permettant la circulation d'une grande quantité de fluide caloporteur dans le circuit secondaire 32. Une grande partie de l'énergie thermique est ainsi transférée de la chaîne de traction 14 au système de climatisation 12

Selon un autre exemple, si la température mesurée de la chaîne de traction 14 est très élevée, le contrôleur 34 augmente la vitesse de pompage de la pompe 44 afin de refroidir davantage la chaîne de traction 14.

Le deuxième échangeur thermique 50 est configuré pour être couplé au système de climatisation 12, le circuit secondaire 32 est alors notamment configuré pour échanger de l'énergie thermique du fluide caloporteur avec le fluide d'échange thermique du système de climatisation 12, de préférence en l'absence d'échange thermique avec l'environnement du véhicule ferroviaire 10.

Le deuxième échangeur thermique 50 comprend un premier volume 55A et un deuxième volume 55B, le deuxième volume 55B étant notamment en contact thermique avec le premier volume 55A. Par exemple, chaque premier 55A et deuxième 55B volume présente sensiblement une forme de parallélépipède rectangle. Le premier volume 55A est configuré pour laisser circuler la partie du fluide caloporteur dérivée par le circuit secondaire 32, et le deuxième volume 55B est configuré pour être traversé par le fluide d'échange thermique apte à circuler dans le circuit externe 20. Les premier et deuxième volumes 55A, 55B sont ainsi configurés pour échanger de l'énergie thermique entre eux, notamment de l'énergie thermique comprise dans le fluide caloporteur et dans le fluide d'échange thermique.

Le dispositif de régulation 52 est en particulier disposé en aval du deuxième échangeur thermique 50.

Le dispositif de régulation 52 est configuré pour réguler le flux du fluide caloporteur dans le circuit secondaire 32. Le dispositif de régulation 52 est, par exemple, un diaphragme. Le diaphragme est de préférence calibré.

L'échangeur thermique additionnel 54 est notamment disposé en amont de la zone d'échange thermique 42. De préférence, l'échangeur thermique additionnel 54 est disposé en aval du dispositif de régulation 52.

L'échangeur thermique additionnel 54 comprend, par exemple, un système de ventilation 56 et est alors configuré pour évacuer de l'énergie thermique du fluide caloporteur vers l'environnement extérieur.

Selon l'exemple de la figure, un coffret de traction 60 est disposé à l'intérieur du véhicule ferroviaire 10 pour accueillir la chaîne de traction 14 et le système d'échange thermique 16 à l'exception du deuxième échangeur thermique 50.

Le coffret de traction 60 est notamment étanche par rapport à l'environnement extérieur. Par exemple, le coffret de traction 60 présente un indice de protection supérieur ou égal à IP 45 selon la norme EN 60529.

Un coffret de climatisation 62, distinct du coffret de traction 60, est disposé à l'intérieur du véhicule ferroviaire 10 pour accueillir le système de climatisation 12 et le deuxième échangeur thermique 50. En d'autres termes, système de climatisation 12 et le deuxième échangeur thermique 50 sont disposés à l'intérieur du coffret de climatisation 62.

Le fonctionnement de l'ensemble d'échange thermique 18, et en particulier du système d'échange thermique 16, va être décrit à présent.

Lors du fonctionnement de la chaîne de traction 14, la chaîne de traction 14 dissipe de l'énergie électrique en énergie thermique. L'énergie thermique fait ainsi augmenter la température de la chaîne de traction 14 et de l'intérieur du coffret de traction 60.

Un procédé d'échange thermique pour la chaîne de traction 14 comporte alors une première transmission d'énergie thermique de la chaîne de traction 14 au fluide caloporteur circulant dans le système d'échange thermique 16.

Notamment, la pompe 44 fait circuler le fluide caloporteur dans les circuits primaire et secondaire 30, 32. Le circuit primaire 30 échange de l'énergie thermique avec la chaîne de traction 14. Notamment, le fluide caloporteur circulant dans le circuit primaire 30 absorbe de l'énergie thermique de la chaîne de traction 14. Le circuit primaire 30 fonctionne alors en tant que circuit de refroidissement. Le fluide caloporteur absorbe ainsi une partie de la chaleur de la chaîne de traction 14. Le circuit secondaire 32 échange notamment de l'énergie thermique avec l'intérieur du coffret de traction 60. Par exemple, de l'énergie thermique de l'intérieur du coffret de traction 60 est transmise au fluide caloporteur circulant dans le circuit secondaire 32.

Le procédé d'échange thermique comporte ensuite une deuxième transmission d'énergie thermique, une partie de l'énergie thermique du fluide caloporteur étant transmise au système de climatisation 12 via le deuxième échangeur thermique 50. La partie du fluide caloporteur circulant dans le circuit secondaire 32, selon le sens F3, échange de l'énergie thermique avec le fluide d'échange thermique circulant à l'intérieur du circuit externe 20. Le circuit externe 20 fonctionne alors en tant que circuit de refroidissement.

Notamment, de l'énergie thermique est donc transmise de la chaîne de traction 14 au système de climatisation 12.

En complément, lorsque la température est basse dans l'environnement extérieur du véhicule ferroviaire 10, l'ensemble d'échange thermique 18 préchauffe l'intérieur du coffret de traction 60 avant une mise en service de la chaîne de traction 14. Le système de climatisation 12 transfère, via le deuxième échangeur thermique 50, de l'énergie thermique au circuit secondaire 32. Le circuit secondaire 32 fonctionne alors, lors du préchauffage, en tant que circuit de chauffage. Le système de ventilation 56 transmet de l'énergie thermique du circuit secondaire 32 à l'intérieur du coffret de traction 60. Lorsque l'intérieur du coffret de traction 60 est préchauffé, le système de ventilation 56 est arrêté.

On conçoit ainsi que le système d'échange thermique 16 présente une meilleure efficacité énergétique, tout en étant facile à mettre en oeuvre.

L'efficacité énergétique du véhicule ferroviaire 10 est améliorée notamment du fait qu'au moins une partie de l'énergie électrique dissipée en énergie thermique par la chaîne de traction 14 est utilisée par le système de climatisation 12.

Par exemple, lorsque le système de climatisation 12 chauffe la cabine du véhicule ferroviaire 10, le système de climatisation 12 utilise de l'énergie thermique transmise de la chaîne de traction 14 pour chauffer la cabine. La consommation d'énergie électrique est ainsi baissée.

Le système d'échange thermique 16 selon l'invention permet de refroidir en outre l'intérieur du coffret de traction 60. Cela permet d'augmenter la durée de vie des composants disposés à l'intérieur du coffret de traction 60. En outre, la performance électrique des composants à l'intérieur du coffret de traction 60 est améliorée notamment lors de températures élevées dans l'environnement extérieur.

Par exemple, une transmission d'une énergie thermique sensiblement égale à 1 kW du système d'échange thermique 16 au système de climatisation 12 permet de refroidir l'intérieur du coffret de traction 60 d'environ 10 °C.

L'étanchéité du coffret de traction 60 par rapport à l'environnement extérieur permet d'améliorer la robustesse du véhicule ferroviaire 10 contre des contraintes environnementales externes et de réduire les coûts de maintenance.

En outre, le véhicule ferroviaire 10 selon l'invention présente des performances acoustiques améliorées, puisque le système de ventilation 46, et éventuellement le système de ventilation 56, sont moins sollicités.

## Revendications

1. Système d'échange thermique (16) pour une chaîne de traction (14) d'un véhicule (10), notamment un véhicule ferroviaire, le système d'échange thermique (16) comprenant :
- un circuit primaire (30) comportant au moins un premier échangeur thermique (40), et
- un circuit secondaire (32) comportant au moins un deuxième échangeur thermique (50) configuré pour être couplé à un système de climatisation (12) d'une cabine du véhicule (10), le circuit secondaire (32) étant connecté au circuit primaire (30), en dérivation du circuit primaire (30), et
- un fluide caloporteur destiné à circuler dans les circuits primaire et secondaire (30, 32),
le circuit primaire (30) comportant une zone d'échange thermique (42) configurée pour passer par la chaîne de traction (14),
le circuit secondaire (32) comprenant un dispositif de régulation (52) de la circulation du fluide caloporteur.

2. Système d'échange thermique (16) selon la revendication 1, dans lequel le circuit primaire (30) comporte en outre une pompe (44) apte à entraîner une circulation du fluide caloporteur.

3. Système d'échange thermique (16) selon la revendication 1 ou 2, dans lequel le dispositif de régulation (52) est disposé en aval du deuxième échangeur thermique (50).

4. Système d'échange thermique (16) selon l'une quelconque des revendications 1 à 3, dans lequel le circuit secondaire (32) comprend, en outre, un échangeur thermique additionnel (54), destiné à être découplé du système de climatisation (12).

5. Système d'échange thermique (16) selon la revendication 4, dans lequel l'échangeur thermique additionnel (54) est disposé en amont de la zone d'échange thermique (42).

6. Système d'échange thermique (16) selon l'une quelconque des revendications 1 à 5, dans lequel le système d'échange thermique (16) comprend un contrôleur (34) configuré pour recevoir au moins une température mesurée de la chaîne de traction (14), le contrôleur (34) étant configuré pour piloter une quantité de fluide caloporteur circulant dans le système d'échange thermique (16) en fonction de ladite au moins une température reçue.

7. Système d'échange thermique (16) pour une chaîne de traction (14) d'un véhicule (10), notamment un véhicule ferroviaire, le système d'échange thermique (16) comprenant :
- un circuit primaire (30) comportant au moins un premier échangeur thermique (40), et
- un circuit secondaire (32) comportant au moins un deuxième échangeur thermique (50) configuré pour être couplé à un système de climatisation (12) d'une cabine du véhicule (10), le circuit secondaire (32) étant connecté au circuit primaire (30), en dérivation du circuit primaire (30), et
- un fluide caloporteur destiné à circuler dans les circuits primaire et secondaire (30, 32),
le circuit primaire (30) comportant une zone d'échange thermique (42) configurée pour passer par la chaîne de traction (14),
le système d'échange thermique (16) comprenant un contrôleur (34) configuré pour recevoir au moins une température mesurée de la chaîne de traction (14), le contrôleur (34) étant configuré pour piloter une quantité de fluide caloporteur circulant dans le système d'échange thermique (16) en fonction de ladite au moins une température reçue.

8. Ensemble d'échange thermique (18) comprenant un système de climatisation (12) et un système d'échange thermique (16) selon l'une quelconque des revendications 1 à 7, le système de climatisation (12) étant couplé au système d'échange thermique (16).

9. Ensemble d'échange thermique (18) selon la revendication 8, dans lequel le système de climatisation (12) et le deuxième échangeur thermique (50) sont disposés à l'intérieur d'un coffret de climatisation (62).

10. Véhicule (10), notamment ferroviaire, comprenant :
- une chaîne de traction (14), et
- une cabine,
**caractérisé en ce que** le véhicule (10) comprend en outre un ensemble d'échange thermique (18) selon la revendication 8 ou 9.

11. Procédé d'échange thermique d'une chaîne de traction (14) d'un véhicule (10), notamment un véhicule ferroviaire, mis en oeuvre par un système d'échange thermique (16) selon l'une quelconque des revendications 1 à 7, le procédé comprenant :
- une première transmission d'énergie thermique, de la chaîne de traction (14) à un fluide caloporteur circulant dans le système d'échange thermique (16) ; et
- une deuxième transmission d'énergie thermique, du fluide caloporteur au système de climatisation (12) via l'échangeur thermique (50).

## Patentansprüche

1. Wärmetauschsystem (16) für eine Antriebskette (14) eines Fahrzeugs (10), insbesondere eines Schienenfahrzeugs, das Wärmetauschsystem (16) umfassend:
- einen Primärkreislauf (30), umfassend mindestens einen ersten Wärmetauscher (40), und
- einen Sekundärkreislauf (32), umfassend mindestens einen zweiten Wärmetauscher (50), der konfiguriert ist, um mit einer Klimaanlage (12) einer Kabine des Fahrzeugs (10) gekoppelt zu werden, wobei der Sekundärkreislauf (32) mit dem Primärkreislauf (30) verbunden ist, indem er den Primärkreislauf (30) umgeht, und
- ein Wärmeträgerfluid, das dazu bestimmt ist, in dem Primär- und dem Sekundärkreislauf (30, 32) zu zirkulieren,
der Primärkreislauf (30) umfassend einen Wärmetauschbereich (42), der konfiguriert ist, um durch die Antriebskette (14) zu verlaufen,
der Sekundärkreislauf (32) umfassend eine Regulierungsvorrichtung (52) der Zirkulation des Wärmeträgerfluids.

2. Wärmetauschsystem (16) nach Anspruch 1, wobei der Primärkreislauf (30) ferner eine Pumpe (44) umfasst, die geeignet ist, um eine Zirkulation des Wärmetauschfluids anzutreiben.

3. Wärmetauschsystem (16) nach Anspruch 1 oder 2, wobei die Regulierungsvorrichtung (52) stromabwärts von dem zweiten Wärmetauscher (50) angeordnet ist.

4. Wärmetauschsystem (16) nach einem der Ansprüche 1 bis 3, wobei der Sekundärkreislauf (32) ferner einen zusätzlichen Wärmetauscher (54) umfasst, der dazu bestimmt ist, von der Klimaanlage (12) entkoppelt zu werden.

5. Wärmetauschsystem (16) nach Anspruch 4, wobei der zusätzliche Wärmetauscher (54) stromaufwärts von dem Wärmetauschbereich (42) angeordnet ist.

6. Wärmetauschsystem (16) nach einem der Ansprüche 1 bis 5, wobei das Wärmetauschsystem (16) eine Steuerung (34) umfasst, die konfiguriert ist, um mindestens eine gemessene Temperatur der Antriebskette (14) zu empfangen, wobei die Steuerung (34) konfiguriert ist, um eine Menge an Wärmeträgerfluid, die in dem Wärmetauschsystem (16) zirkuliert, abhängig von der mindestens einen empfangenen Temperatur zu steuern.

7. Wärmetauschsystem (16) für eine Antriebskette (14) eines Fahrzeugs (10), insbesondere eines Schienenfahrzeugs, das Wärmetauschsystem (16) umfassend:
- einen Primärkreislauf (30), umfassend mindestens einen ersten Wärmetauscher (40), und
- einen Sekundärkreislauf (32), umfassend mindestens einen zweiten Wärmetauscher (50), der konfiguriert ist, um mit einer Klimaanlage (12) einer Kabine des Fahrzeugs (10) gekoppelt zu werden, wobei der Sekundärkreislauf (32) mit dem Primärkreislauf (30) verbunden ist, indem er den Primärkreislauf (30) umgeht, und
- ein Wärmeträgerfluid, das dazu bestimmt ist, in dem Primär- und dem Sekundärkreislauf (30, 32) zu zirkulieren,
der Primärkreislauf (30) umfassend einen Wärmetauschbereich (42), der konfiguriert ist, um durch die Antriebskette (14) zu verlaufen,
das Wärmeaustauschsystem (16) umfassend eine Steuerung (34), die konfiguriert ist, um mindestens eine gemessene Temperatur der Antriebskette (14) zu empfangen, wobei die Steuerung (34) konfiguriert ist, um eine Menge an Wärmeträgerfluid, die in dem Wärmetauschsystem (16) zirkuliert, abhängig von der mindestens einen empfangenen Temperatur zu steuern.

8. Wärmetauschanordnung (18), umfassend eine Klimaanlage (12) und ein Wärmetauschsystem (16) nach einem der Ansprüche 1 bis 7, wobei die Klimaanlage (12) mit dem Wärmetauschsystem (16) gekoppelt ist.

9. Wärmetauschanordnung (18) nach Anspruch 8, wobei die Klimaanlage (12) und der zweite Wärmetauscher (50) im Innern eines Klimakastens (62) angeordnet sind.

10. Fahrzeug (10), insbesondere Schienenfahrzeug, umfassend:
- eine Antriebskette (14), und
- eine Kabine,
**dadurch gekennzeichnet, dass** das Fahrzeug (10) ferner eine Wärmetauschanordnung (18) nach Anspruch 8 oder 9 umfasst.

11. Wärmeaustauschverfahren einer Antriebskette (14) eines Fahrzeugs (10), insbesondere eines Schienenfahrzeugs, das von einem Wärmetauschsystem (16) nach einem der Ansprüche 1 bis 7 durchgeführt wird, das Verfahren umfassend:
- eine erste Wärmeenergieübertragung von der Antriebskette (14) auf ein Wärmeträgerfluid, das in dem Wärmetauschsystem (16) zirkuliert; und
- eine zweite Wärmeenergieübertragung von dem Wärmeträgerfluid über den Wärmetauscher (50) zu der Klimaanlage (12).

## Claims

1. Heat exchange system (16) for a traction chain (14) of a vehicle (10), in particular a railway vehicle, the heat exchange system (16) comprising:
- a primary circuit (30) comprising at least a first heat exchanger (40), and
- a secondary circuit (32) comprising at least a second heat exchanger (50) configured to be coupled to an air conditioning system (12) of a vehicle cabin (10), the secondary circuit (32) being connected to the primary circuit (30), in parallel with the primary circuit (30), and
- a heat transfer fluid for circulation in the primary and secondary circuits (30, 32),
the primary circuit (30) having a heat exchange zone (42) configured to pass through the traction chain (14),
the secondary circuit (32) comprising a device (52) for regulating the circulation of the heat transfer fluid.

2. A heat exchange system (16) according to claim 1, wherein the primary circuit (30) further comprises a pump (44) adapted to drive a circulation of the heat transfer fluid.

3. A heat exchange system (16) according to claim 1 or 2, wherein the control device (52) is disposed downstream of the second heat exchanger (50).

4. A heat exchange system (16) according to any one of claims 1 to 3, wherein the secondary circuit (32) further comprises an additional heat exchanger (54), intended to be decoupled from the air conditioning system (12).

5. The heat exchange system (16) according to claim 4, wherein the additional heat exchanger (54) is disposed upstream of the heat exchange zone (42).

6. A heat exchange system (16) according to any one of claims 1 to 5, wherein the heat exchange system (16) comprises a controller (34) configured to receive at least one measured temperature of the traction chain (14), the controller (34) being configured to control an amount of heat transfer fluid flowing through the heat exchange system (16) in dependence on the at least one received temperature.

7. Heat exchange system (16) for a traction chain (14) of a vehicle (10), in particular a railway vehicle, the heat exchange system (16) comprising:
- a primary circuit (30) comprising at least a first heat exchanger (40), and
- a secondary circuit (32) comprising at least a second heat exchanger (50) configured to be coupled to an air conditioning system (12) of a vehicle cabin (10), the secondary circuit (32) being connected to the primary circuit (30), in parallel with the primary circuit (30), and
- a heat transfer fluid for circulation in the primary and secondary circuits (30, 32),
the primary circuit (30) having a heat exchange zone (42) configured to pass through the traction chain (14),
the heat exchange system (16) comprising a controller (34) configured to receive at least one measured temperature of the traction chain (14), the controller (34) being configured to control a quantity of heat transfer fluid flowing through the heat exchange system (16) in dependence on the at least one received temperature.

8. A heat exchange assembly (18) comprising an air conditioning system (12) and a heat exchange system (16) according to any of claims 1 to 7, the air conditioning system (12) being coupled to the heat exchange system (16).

9. The heat exchange assembly (18) of claim 8, wherein the air conditioning system (12) and the second heat exchanger (50) are disposed within an air conditioning cabinet (62).

10. A vehicle (10), in particular a railway vehicle, comprising:
- a traction chain (14), and
- a cab,
**characterised in that** the vehicle (10) further comprises a heat exchange assembly (18) according to claim 8 or 9.

11. A method of heat exchange of a traction chain (14) of a vehicle (10), in particular a railway vehicle, implemented by a heat exchange system (16) according to any one of claims 1 to 7, the method comprising:
- a first transmission of thermal energy from the traction chain (14) to a heat transfer fluid circulating in the heat exchange system (16); and
- a second transmission of thermal energy from the heat transfer fluid to the air conditioning system (12) via the heat exchanger (50).
